# DEMANDE DE BREVET EUROPEEN

(11) **EP 0 528 703 A1**
(43) Date de publication de la demande: **24.02.1993**
(21) Numéro de dépôt: 92402018.3
(22) Date de dépôt: 10.07.1992
(51) Int. Cl.: G05B 19/05, G06F 13/38

(54) **Structure d'un ensemble d'automates communicants**

(30) Priorité: 16.07.1991 FR 9108984
(71) Demandeur: ALCATEL N.V., NL-1077 XX Amsterdam (NL); ALCATEL CIT, F-75008 Paris (FR)
(72) Inventeur: Martin, Jean Max, F-22310 Plestin les Greves (FR)
(74) Mandataire: Sciaux, Edmond

(57) **Abrégé**

Les automates (A1,...,A4) de cet ensemble (E) communiquent entre eux et avec l'environnement extérieur à l'ensemble, selon un mode de communication asynchrone uniquement (2′).

Chaque automate (A1,...,A4) est une combinaison de sous-automates (S1,...,S16), chaque sous-automate comportant au plus une interface (I1,...,I7) externe à un automate.

Tous les sous-automates d'un même automate communiquent entre eux par un seul mode de communication dit pseudo-synchrone (3′) selon lequel les évènements constituant une communication sont synchrones vis-à-vis de l'extérieur des sous-automates en communication, et sont asynchrones vis-à-vis de l'intérieur de ces sous-automates.

Chaque sous-automate (S1,...,S16) est une combinaison d'automates élémentaires (B1,...,B41) appelés briques, toutes les briques d'un même sous-automate communicant entre elles par un mode de communication synchrone uniquement (1′).

Application aux logiciels des centraux téléphoniques.

## Description

L'invention concerne la structure d'un ensemble d'automates communicants, ces automates comportant une pluralité d'interfaces qui traitent une pluralité de messages entrelacés. Un tel ensemble d'automates est utilisé par exemple dans une application de traitement d'appels pour un centre de commutation d'un réseau de télécommunications.

Le concepteur d'un ensemble d'automates communicants constituant une application de traitement d'appel, par exemple, connaît au départ un ensemble de fonctions qu'il souhaite que cette application remplisse. Le comportement de chaque fonction sera décrit par un automate. Le concepteur connaît les interfaces externes et les interfaces internes de cet ensemble d'automates. Le développement d'un ensemble d'automates communicants comporte quatre étapes :
- une spécification d'un ensemble d'automates communicants, à partir des fonctions souhaitées, ces automates communicants étant destinés à être implantés sous la forme de logiciels dans la machine cible, mais étant développés sur la machine de développement, sous la forme de modèles;
- une analyse des automates et de leurs communications par leurs interfaces, sur cette machine de développement, sous la forme de modèles;
- une implémentation des automates communicants dans la machine cible, sous la forme de logiciels;
- une validation de ces logiciels dans la machine cible.

Il est connu d'utiliser des techniques de descriptions formelles offrant des moyens puissants, pour concevoir un ensemble d'automates communicants. En particulier, on utilise certains langages spécialisés dont la sémantique est basée sur des modèles mathématiques. Ces langages permettent aussi de faire une vérification de ces modèles, mais les procédés d'utilisation de ces langages conviennent mal pour des systèmes de grande complexité tels que les systèmes de télécommunications.

Par ailleurs, on connaît la technique de modélisation par les réseaux de Petri, notamment par l'article : "Modelling and Analysis of Communication and Cooperation Protocols Using Petri Nets Based Models" North Holland Publishing Compagny Computer Networks 6 (1982) pages 419-441.

La technique des réseaux de Petri est une extension de la technique des automates séquentiels à nombre d'états fini, cette dernière utilisant les notions d'état et de transition. Une transition modèlise le passage du système d'un état stable à un autre état stable. L'originalité des réseaux de Petri tient essentiellement au fait que les transitions ne relient plus des états globaux d'un système, mais des états partiels appelés places, ce qui permet d'exprimer la synchronisation. Un certain nombre de marques appelées jetons, peuvent exister dans les places. Chaque configuration des jetons correspond à un état global différent. La technique des réseaux de Petri permet de représenter un ensemble de nombreux états et de nombreuses transitions d'un automate, et la synchronisation.

Lorsque la technique des réseaux de Petri est utilisée pour développer une application, la spécification de cette application consiste à décrire, sous la forme d'un réseau de Petri :
- des places et une configuration initiale des jetons, pour l'état global initial;
- des transitions reliées aux places, et associés à des évènements, chaque évènement étant déclencheur ou conséquence d'une transition, ces évènements concrétisant l'interface entre l'application et l'extérieur à l'application.

L'analyse consiste à vérifier des propriétés souhaitées par le concepteur, notamment la consistance globale du réseau de Petri obtenu , c'est-à-dire qu'il possède des propriétés minimales d'un réseau de Petri; et consiste à rechercher des propriétés appelées invariants. Une analyse est exhaustive si elle consiste en une recherche de tous les états, notamment pour vérifier l'accessibilité de chaque état et la vivacité de chaque transition. La recherche des invariants consiste en une vérification de certaines propriétés spécifiques à l'application qui est modélisée.

L'ensemble des états accessibles est appellé graphe d'accessibilité, et constitue un automate qui concrétise l'application à développer.

L'implémentation sur la machine cible découle directement de la modélisation réalisée sous la forme d'un réseau de Petri pendant l'étape de spécification, en ce qui concerne la synchronisation. Il reste à écrire des suites d'instructions correspondant à des actions associées aux transitions du modèle réseau de Petri.

La validation du logiciel consiste à définir des jeux de test et à exécuter ces jeux de test. Classiquement ceux-ci sont définis par le concepteur.

Pour développer une application complexe, comportant de nombreuses places et de nombreuses transitions, ce procédé connu présente les difficultés suivantes :
- le concepteur a beaucoup de difficulté à décrire le comportement global de cette application par un réseau de Petri unique;
- l'analyse exhaustive de ce réseau nécessite un temps de calcul et une capacité de mémoire atteignant rapidement des valeurs prohibitives sur la machine de développement;
- la mise au point est difficile et nécessite de refaire l'analyse de nombreuses fois.

Un but de l'invention est de proposer une structure d'ensemble d'automates permettant d'uniformiser les méthodes de production de tels ensembles d'automates pour : faciliter la visibilité de tels ensembles d'automates, augmenter leur qualité, et faciliter leur maintenance, notamment pour des applications de très gros volume.

Un second but de l'invention est de faciliter la mise au point de la synchronisation d'un ensemble d'automates ayant chacun une pluralité d'interfaces externes, cette mise au point étant difficile même si chaque automate est décomposé en sous-automates.

Un troisième but est de faciliter l'observation du fonctionnement interne des automates, pour faciliter la mise au point.

L'objet de l'invention est une structure d'ensemble d'automates communicants, ces automates comportant une pluralité d'interfaces qui traitent une pluralité de messages, caractérisée :
en ce que les automates de cet ensemble communiquent entre eux et avec l'environnement extérieur à l'ensemble, selon un mode de communication asynchrone uniquement;
en ce que chaque automate est une combinaison de sous-automates, chaque sous-automate comportant au plus une interface externe à un automate; tous les sous-automates d'un même automate communiquant entre eux par un seul mode de communication dit pseudo-synchrone selon lequel les évènements constituant une communication sont synchrones vis-à-vis de l'extérieur des sous-automates en communication, et sont asynchrones vis-à-vis de l'intérieur de ces sous-automates;
et en ce que chaque sous-automate est une combinaison d'automates élémentaires appelés briques, toutes les briques d'un même sous-automate communicant entre elles par un mode de communication synchrone uniquement.

La structure ainsi caractérisée permet d'isoler et donc de rendre lisibles et plus faciles à mettre au point, les automates élémentaires appelés briques, pendant : la conception, la mise au point de la synchronisation, et la maintenance d'un ensemble d'automates communicants, même si l'application a un très gros volume. En particulier, lorsque la technique des réseaux de Petri est utilisée pour développer une application, la spécification et l'analyse des réseaux de Petri modélisant les briques est beaucoup plus simple que dans les structures classiques dont le niveau le plus fin est constitué de sous-automates. D'autre part, l'analyse de l'ensemble d'automates peut être exhaustive tout en étant plus simple à réaliser car il est possible de la réaliser graduellement en composant des réseaux de Petri modélisant les briques, puis en composant des réseaux modélisant : les sous-automates, les communications inter-automates, et les communications entre l'ensemble d'automates et l'environnement extérieur.

Un ensemble d'automates peut être implémenté dans une machine cible par un codage direct des automates, pour constituer un logiciel mis en oeuvre par cette machine cible. Une autre solution consiste, pour chaque automate, à implémenter plusieurs sous-automates constituant cet automate, et à utiliser un moteur d'automates. Selon une caractéristique particulière, la structure selon l'invention comporte un moteur d'automate pour chaque automate. Ce moteur d'automate a pour fonctions de gérer les cycles de cet automate, et comporte une file du type "premier entré premier sorti", appellée file interne à l'automate, pour transférer des messages entre les sous-automates constituant cet automate.

Chaque message inter-sous-automates est inscrit dans la file interne, et un message est lu dans la file interne au début de chaque cycle du moteur. La file interne assure la communicatioin inter-sous-automates.

Selon un mode de réalisation préférentiel, le moteur réalise des cycles dits d'automate consistant à :
- lire un évènement externe inscrit dans une file d'entrée-sortie de l'automate, appelée file externe;
- faire au moins un cycle de sous-automate, jusqu'à épuisement des évènements stockés dans la file interne à l'automate.

Au cours de chaque cycle d'automate, le moteur réalise au moins un cycle dit cycle de sous-automate, consistant à :
- lire un évènement dans la file interne de l'automate;
- déterminer un nouvel état pour le sous-automate concerné par cet évènement;
- déterminer et déclencher une action correspondant à ce changement d'état du sous-automate.

Selon un mode de réalisation préférentiel, le moteur peut exécuter, au cours d'un même cycle de sous-automate, une pluralité d'actions correspondant respectivement à une pluralité de briques différentes.

La structure ainsi caractérisée permet au concepteur de l'ensemble d'automates d'admettre l'apparition de certains évènements inattendus, externes ou internes aux sous-automates, car le moteur ainsi caractérisé peut observer des évènements inattendus, et peut les traiter, grâce à la gestion centralisée qu'il réalise pour chaque automate. Pendant la mise au point de l'ensemble, ce moteur permet donc au concepteur d'observer une transition particulière dans l'automate associé à ce moteur.

L'invention sera mieux comprise et d'autres détails apparaîtront à l'aide de la description ci-dessous et des figures l'accompagnant :
- la figure 1a, 1b représente schématiquement un exemple d'ensemble d'automates ayant une structure selon l'invention;
- la figure 2 représente un organigramme d'un exemple de procédé mis en oeuvre pour concevoir un ensemble d'automates ayant la structure selon l'invention;
- la figure 3 représente schématiquement un exemple de transition et l'étiquette qui lui est attribuée;
- les figures 4 à 7 illustrent le mode de communication synchrone qui est utilisé pour composer des réseaux de Petri;
- la figure 8 illustre la composition de deux réseaux de Petri par le mode de communication asynchrone;
- la figure 9 illustre la composition de trois réseaux de Petri par le mode de communication dit pseudo-synchrone;
- la figure 10 illustre le fonctionnement d'un exemple de moteur d'automates, pour implémenter un ensemble d'automates ayant la structure selon l'invention;

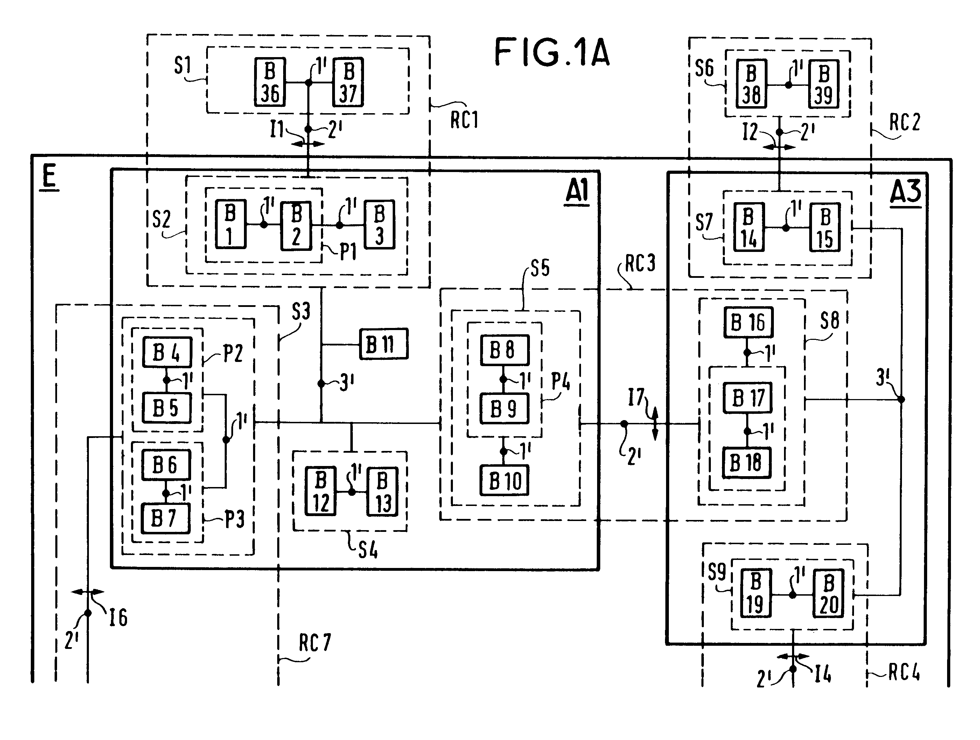

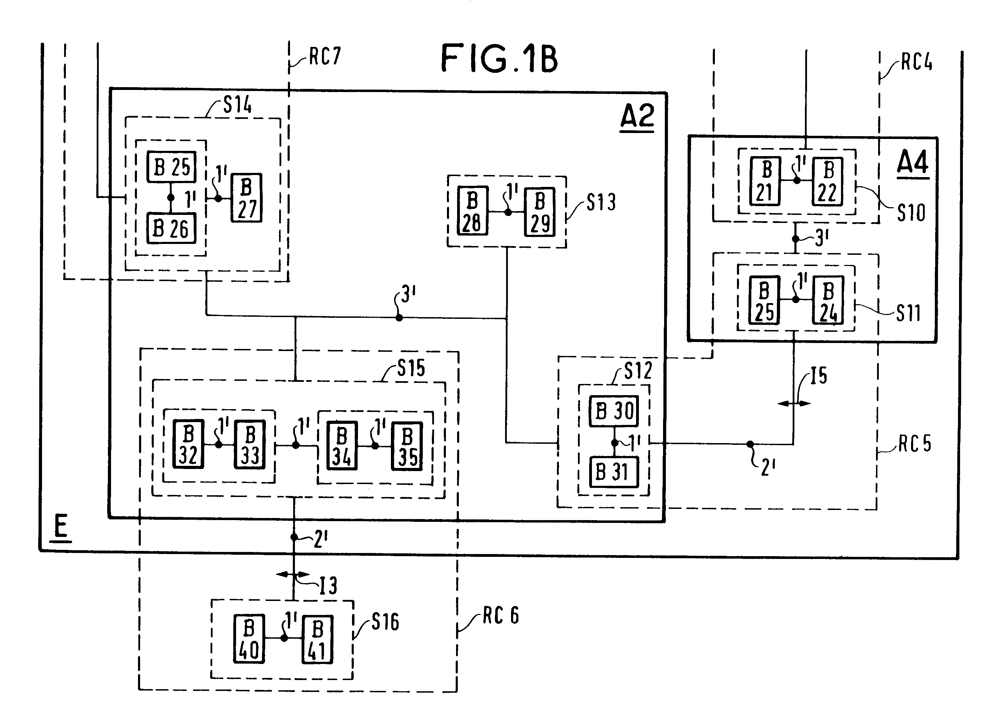

La figure 1, constituée de la réunion des figures 1a et 1b, représente à titre d'exemple un ensemble E constitué d'automates A1, A2, A3, A4. L'automate A1 possède les interfaces externes suivantes :
- une interface I1 avec l'environnement extérieur à l'ensemble E;
- une interface inter-automates I6 avec l'automate A2;
- une interface inter-automates I7 avec l'automate A3.

L'automate A3 possède les interfaces externes suivantes :
- une interface I2 avec l'environnement extérieur à l'ensemble E;
- une interface inter-automates I7 avec l'automate A1;
- une interface inter-automates I4 avec l'automate A4.

L'automate A4 possède des interfaces externes suivantes :
- une interface inter-automates I4 avec l'automate A3;
- une interface inter-automates I5, avec l'automate A2.

L'automate A2 possède les interfaces externes suivantes :
- une interface inter-automates I5 avec l'automate A4;
- une interface inter-automates I6 avec l'automate A1;
- une interface I3 avec l'environnement extérieur à l'ensemble E.

Les interfaces I1 à I7 réalisent des communications selon le mode asynchrone uniquement. Chacun de ces automates est constitué de sous-automates. L'automate A1 est constitué des sous-automates S2, S3, S4, S5 et B11. L'automate A2 est constitué des sous-automates S12 à S15. L'automate A3 est constitué des sous-automates S7 à S9. L'automate A4 est constitué des sous-automates S10 et S11. Tous ces automates ont pour particularités d'avoir au plus une interface externe à l'automate auquel ils appartiennent respectivement.

Chacun de ces sous-automates est lui-même composé d'automates élémentaires appelés briques n'ayant que quelques états distincts.

Dans l'automate A1 : le sous-automate S2 est constitué de trois briques B1, B2, B3; le sous-automate S3 est constitué de quatre briques B4 à B7; le sous-automate S2 est constitué de trois briques B1, B2, B3; le sous-automate S3 est constitué de quatre briques B4 à B7; le sous-automate S4 est constitué de deux briques B12 et B13; le sous-automate S5 est constitué de trois briques B8, B9, B10; et le sous-automate B11 est constitué d'une seule brique.

Dans l'automate A2 : le sous-automate S12 est constitué de deux briques B30 et B31; le sous-automate S13 est constitué de deux briques B28 et B29; le sous-automate S14 est constitué de trois briques B25, B26, B27; le sous-automate S15 est constitué de quatre briques B32 à B35. Dans l'automate A3 : le sous-automate S7 est constitué de deux briques B14, B15; le sous-automate S8 est constitué de trois briques B16, B17, B18; le sous-automate S9 est constitué de deux briques B19, B20. Dans l'automate A4 : le sous-automate S10 est constitué de deux briques B21, B22; et le sous-automate S11 est constitué de deux briques B23 et B24.

A l'intérieur de chacun de ces sous-automates les briques communiquent entre elles selon le mode de communication synchrone uniquement.

Un telle structure a trois niveaux hiérarchiques, avec un mode de communication bien déterminé et unique pour chaque niveau hiérarchique, facilite beaucoup la visibilité d'un ensemble d'automates, parce que le concepteur n'a à manipuler que des automates élémentaires (les briques) et parce que chaque sous-automate n'a pas plus d'une interface externe à un automate, ce qui permet de rendre indépendants les problèmes de mise au point de chaque interface. Cette structure permet donc d'améliorer la qualité du logiciel implémentant cet ensemble d'automates et facilite sa maintenance.

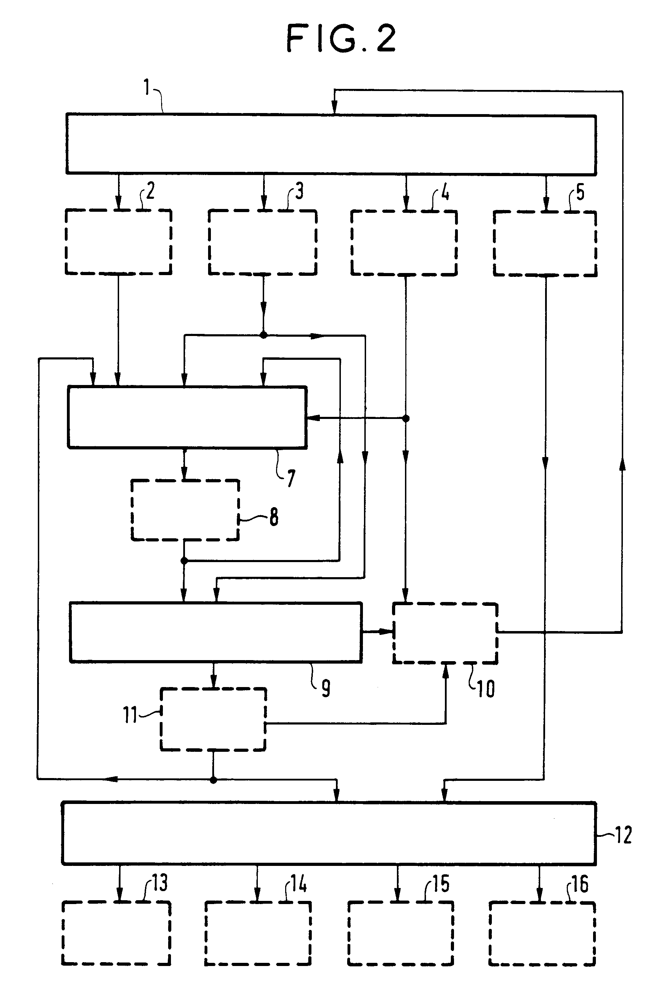

Ces avantages sont obtenus quel que soit le procédé de développement mis en oeuvre pour obtenir une telle structure. Cependant cette structure procure des avantages supplémentaires si le développement est réalisé selon un procédé préférentiel décrit ci-dessous et illustré par les figures 2 à 9. Cet avantage supplémentaire consiste essentiellement à faciliter la mise au point de l'ensemble d'automates, par le fait que cette structure permet une analyse graduelle de l'ensemble d'automates, au lieu d'une analyse globale de chacun des automates, comme cela est le cas selon les procédés classiques de développement d'un ensemble d'automates communicants, en utilisant la technique des réseaux de Petri.

La figure 2 représente un organigramme des étapes de ce procédé préférentiel pour concevoir un ensemble d'automates communiquants tel que E.

Une première étape 1 de l'organigramme consiste à faire décrire, par le concepteur, chaque fonction de l'application sous la forme de comportements partiels modélisés chacun par un réseau de Petri élémentaire initial 3, sous la forme d'interfaces 4, inter-automates ou externes à l'ensemble d'automates, sous la forme de contraintes inter-réseaux initiaux et sous la forme de propriétés souhaitées, spécifiques pour chaque automate. Pour appliquer le mode de mise en oeuvre préférentiel du procédé selon l'invention, le concepteur prend soin de modéliser chaque comportement partiel par un réseau de Petri élémentaire initial n'ayant qu'une seule interface, ou aucune interface externe à un automate. Chaque réseau de Petri initial ayant une interface externe respecte des contraintes imposées par des interfaces externes à l'ensemble d'automates ou par des interfaces inter-automates. Les contraintes imposées à chaque réseau initial correspondent généralement à une phase d'une communication. Les contraintes inter-réseaux initiaux corespondent, pour chaque automate, au comportement de l'environnement extérieur à l'ensemble.

Au moment de faire réaliser, par la machine de développement, chaque composition de réseaux de Petri, le concepteur indique à la machine de développement quels réseaux il souhaite composer et selon quel mode de communication, 2.

Au cours de la description initiale le concepteur décrit aussi des données complémentaires 5 concernant les actions associées aux transitions et qui seront nécessaires au moment au moment de l'implémentation du logiciel concrétisant l'ensemble d'automates qui va être développé.

L'étape suivante consiste en une première analyse 9 pour vérifier la consistance des réseaux de Petri initiaux. Elle vérifie les propriétés minimales et classiques d'un réseau de Petri : Il doit être borné, vivant, propre, et sans blocage. Si l'un des réseaux initiaux n'a pas toutes ces propriétés, la machine de développement le signale au concepteur pour qu'il rectifie la description initiale des comportements partiels.

La description initiale 1 de chaque réseau de Petri consiste aussi à décrire pour chaque transition de ce réseau, les évènements déclencheurs de cette transition et les évènements conséquences de cette transition. Cette description est réalisée de manière très concise, sous la forme d'une étiquette attribuée à chaque transition, en inscrivant ces évènements les uns à la suite des autres et en faisant précéder chacun d'un symbole, ? ou !, indiquant respectivement si c'est un évènement déclencheur ou si c'est un évènement conséquence de la transition.

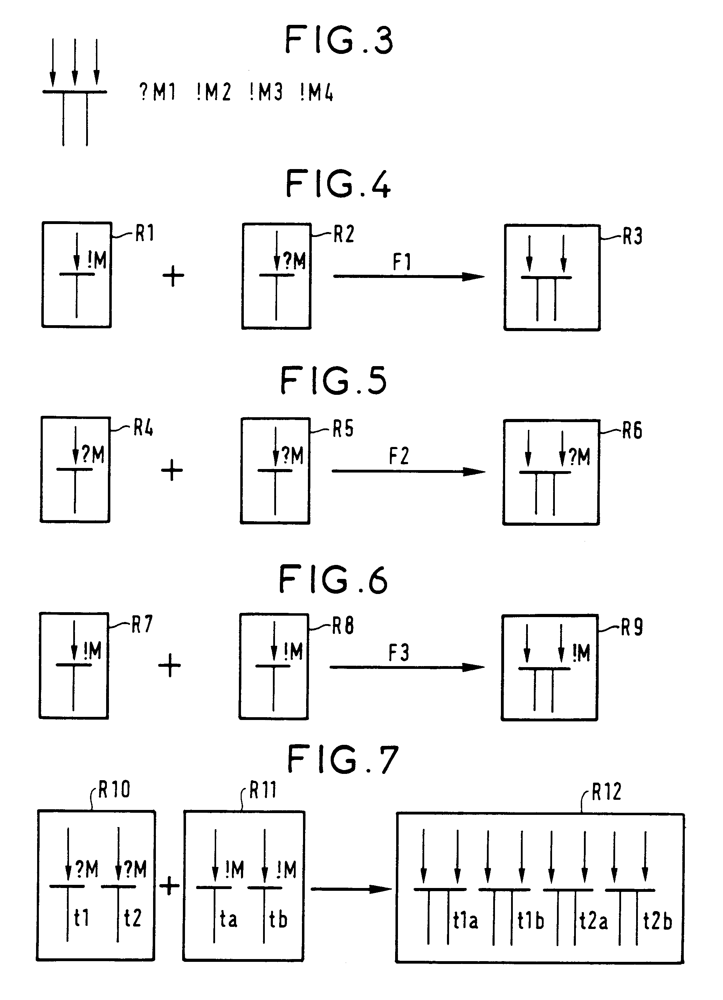

La figure 3 représente à titre d'exemple une transition et son étiquette ?M1 !M2 !M3 !M4. Cette étiquette signifie que la transition est déclenchée par l'évènement M1 et qu'elle a pour conséquences des évènements M2, M3, M4. Comme il apparaîtra plus loin, la comparaison entre les étiquettes respectives de deux transitions de deux réseaux différents permet de savoir quels sont leurs interactions. Ces étiquettes ont donc un rôle de communication entre des transitions n'appartenant pas à un même réseau de Petri. Elles sont utilisées par la machine de développement, pour composer des réseaux de Petri, désignés par le concepteur, lorsque le concepteur veut établir une communication entre des réseaux à composer.

Sur la figure 2, la mise en oeuvre du procédé préférentiel consiste ensuite à faire réaliser par la machine de développement une série de compositions 7 et d'analyses 9. Chaque composition 7 étant suivie d'une analyse 9 du réseau résultant, qui fournit un graphe d'accessibilité 11 et vérifie les propriétés 10 du réseau résultant, et les confronte aux propriétés souhaitées 4.

Pour faciliter la vérification de propriétés spécifiques de réseaux résultant de la composition de réseaux, le procédé consiste, en outre, à repérer certains évènements au moment où le concepteur décrit les réseaux de Petri initiaux. Les évènements ainsi repérés, sont éliminés du graphe d'accessibilité 11, ce qui permet d'en réduire la taille, et facilite son interprétation par le concepteur.

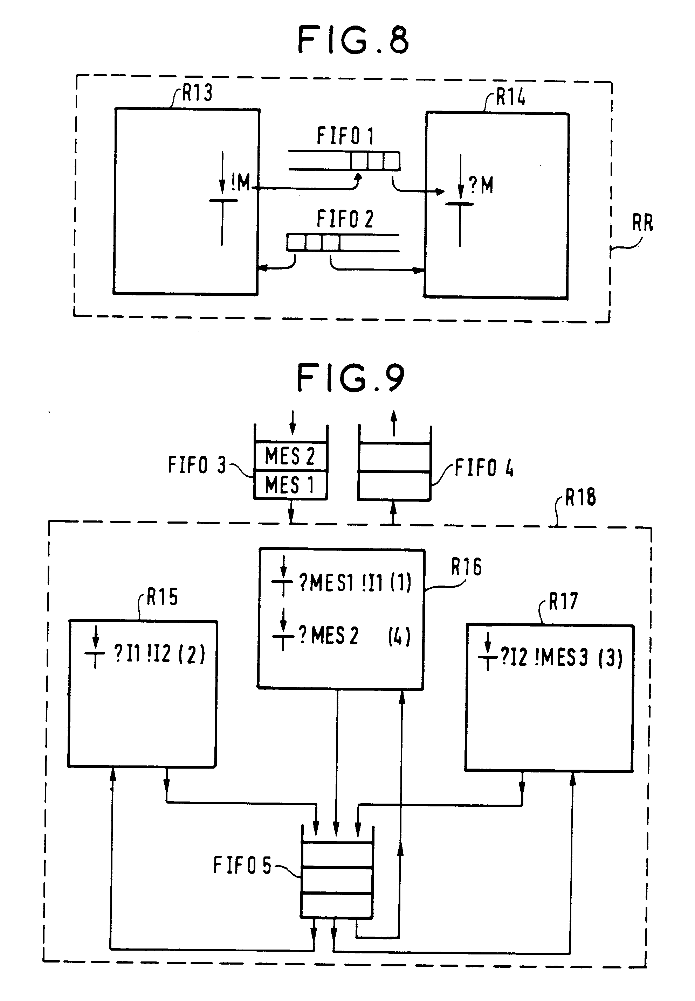

Lorsque les trois étapes du procédé ont été réalisés avec succès, le procédé d'aide à la conception peut être suivi d'une implémentation 12 de l'ensemble des automates ayant été ainsi conçus et analysés. Cette implémentation consiste à faire correspondre des tâches logicielles aux transitions d'un graphe d'accessibilité. La machine de développement décrit les transitions sous la forme de tableaux de données 13. Ces transitions peuvent être activées par un logiciel classique : interprète d'automate ou interprète multi-automates, implanté sur la machine cible. La taille des tables de descriptions du graphe d'accessibilité est généralement prohibitive lorsqu'on considère le graphe d'accessibilité du réseau de Petri modélisant chaque automate de l'ensemble E. Il est donc préférable de décrire plutôt les graphes d'accessibilité de plusieurs sous-automates constituant un automate pour obtenir des tables de descriptions ayant des tailles raisonnables. Les contraintes inter-réseaux initiaux, lesquelles sont représentées par des contraintes entre sous-automates, ne sont pas implémentées car elles existent déjà dans l'environnement extérieur à l'ensemble. Dans le cas de l'implémentation de plusieurs sous-automates, il est nécessaire de prévoir un mécanisme de synchronisation entre les différents sous-automates, en utilisant une file interne spécifique pour cette synchronisation. Cette file est celle utilisée pour la composition des sous-automates et décrite plus loin en référence à la figure 8.

Par ailleurs, le concepteur implémente chaque action 5 en écrivant une suite d'instructions 14, en mettant en commentaire le nom de la transition qui correspond à cette action.

Lorsque le logiciel a été codé et compilé, il est validé de manière classique au moyen de jeux de test 16 qui sont des séquences d'évènements déterminés à partir des graphes d'accessibilité :
- soit des modèles représentant les différents automates constituant l'ensemble E;
- soit des modèles représentant les différents sous-automates constituant chaque automate.

Accessoirement l'implémentation 12 produit aussi une documentation 15 en vue de l'utilisation des logiciels implémentant l'ensemble d'automates ayant été conçu.

Considérons plus en détails les compositions 7. Chaque composition consiste à composer plusieurs réseaux de Petri. Mais selon le mode de mise en oeuvre préférentiel, dans une première étape, toutes les opérations de composition sont réalisées par le mode de communication synchrone et composent exclusivement :
- soit deux réseaux initiaux;
- soit un réseau initial et un réseau remplaçant des réseaux initiaux ayant été composés précédemment;
- soit deux réseaux remplaçants.

En outre, au cours de cette première étape, les réseaux de Petri résultant de ces compositions doivent comporter au plus une interface externe à un automate.

Le mode de communication synchrone consiste à fusionner au moins deux transitions appartenant aux deux réseaux de Petri à composer et ayant un même évènement en commun dans leurs étiquettes. Les figures 3 à 5 illustrent ces trois types possibles de fusion de transitions. Le concepteur choisit l'un de ces trois types pour chaque fusion.

La figure 4 illustre un premier type de fusion F1. Si un réseau de Petri R1 possède une transition qui a pour conséquence l'évènement M et si le réseau R2 possède une transition qui a pour déclencheur l'évènement M, ces deux réseaux peuvent être fusionnés par le type de fusion F1 pour constituer un réseau R3 possédant une transition résultant de la fusion des deux transitions considérées.

La figure 5 illustre un second type de fusion F2. Si un réseau R4 possède une transition déclenchée par un évènement M et si un réseau R5 possède une transition déclenchée, elle aussi, par l'évènement M, ces deux réseaux peuvent être fusionnés en un réseau R6 possédant une transition résultant de la fusion des deux transitions considérées et qui est déclenchée par l'évènement M.

La figure 6 illustre un troisième type de fusion F3. Si un réseau R7 possède une transition ayant pour conséquence un évènement M et si un réseau R8 possède une transition qui a, elle aussi, pour conséquence l'évènement M, alors ces deux réseaux peuvent être fusionnés pour constituer un réseau de Petri R9 possédant une transition qui a pour conséquence l'évènement M.

Lorsque chacun des réseaux à composer possède plus d'une transition qui est la conséquence ou le déclencheur d'un même évènement, le réseau remplaçant les réseaux composés possède des transitions résultantes qui sont répliquées à cause de la composition deux à deux des transitions des réseaux à composer.

La figure 7 illustre ce cas. Si un réseau R10 possède deux transitions t1, t2 qui ont pour déclencheur un même évènement M et si un réseau R11 possède deux transitions ta, tb qui ont pour conséquence le même évènement M, alors il est possible de fusionner ces transitions deux à deux par le type de fusion F1 et d'obtenir un réseau résultant R12 comportant quatre transitions t1a, t1b, t2a, t2b.

Comme représenté sur la figure 2, après chaque composition 7, un réseau résultant 8 subit une analyse 9 qui consiste à vérifier, 10, que les propriétés obtenues correspondent aux propriétés 4 souhaitées par le concepteur, et à déterminer un graphe d'accessibilité 11. La détermination 11 du graphe d'accessibilité et la vérification 10 des propriétés sont réalisées simultanément par la machine de développement, selon des procédés de calcul classiques pour des réseaux de Petri. Cette analyse est dynamique et exhaustive, c'est-à-dire recherche tous les états et toutes les transitions possibles dans le réseau résultant de la composition. Elle déduit de ce graphe les propriétés générales de ce réseau et notamment vérifie s'il est : borné, sauf, vivant, propre, et sans blocage.

Elle détermine en outre si le réseau a les propriétés spécifiques souhaitées recherchées par le concepteur. Si le réseau a toutes les propriétés spécifiques souhaitées, la mise en oeuvre du procédé peut être poursuivie. Dans le cas contraire, la machine de développement indique au concepteur quelles sont les propriétés qui ne sont pas vérifiées. Le concepteur modifie la description des réseaux initiaux pour y remédier. D'autre part, le graphe d'accessibilité 11 peut être réutilisé pour des compositions ultérieures avec d'autres réseaux de Petri, soit initiaux, soit résultant de composition précédemment réalisées.

Afin d'obtenir un ensemble d'automates ayant la structure selon l'invention, une deuxième étape, pour les compositions 7 de réseaux de Petri, consiste pour chaque interface externe à l'ensemble d'automates et pour chaque interface inter-automates, à réaliser des compositions par le mode de communication asynchrone pour composer des réseaux de Petri remplaçant des réseaux initiaux, entre eux ou avec un réseau initial éventuellement subsistant, pour obtenir lors de chaque composition un réseau de Petri modélisant une communication entre deux automates ou entre une interface externe à un automate et l'environnement de cet automate.

Chacun des réseaux de Petri obtenus à la fin de la première étape représente le comportement d'un sous-automate constituant une partie de l'un des automates à concevoir, même s'il s'agit d'un réseau initial subsistant.

Toutes les opérations de composition réalisées au cours de la deuxième étape sont réalisées au moyen de deux files, une dans chaque sens de communication. Ces deux files sont du type "premier entré, premier sorti", et sont incorporées au réseau résultant. Ce mode de communication est utilisé pour pouvoir analyser des dialogues asynchrones entre réseaux de Petri, et plus particulièrement pour analyser des protocoles.

La figure 8 illustre le mode de communication asynchrone, dans un exemple où deux réseaux R13 et R14 sont mis en communication au moyen de deux files référencées FIFO1 et FIFO2, une pour chaque sens, pour constituer un réseau résultant RR. Pour mieux analyser la communication asynchrone entre les deux réseaux, des contraintes sur la communication peuvent consister à imposer : des pertes de signaux ou des débordements de temporisation; ou une certaine synchronisation temporaire, selon une transmission en alternat entre les deux réseaux; ou bien une limitation temporaire du nombre d'évènements stockés en attente dans chacune des deux files. Ces contraintes sont intégrées automatiquement aux réseaux de Petri, par la machine d'aide au développemement, sous la commande du concepteur. Il est à la portée de l'homme de l'art de réaliser un programme, pour cette machine de développement, mettant en oeuvre cette caractéristique du procédé.

Afin d'obtenir un ensemble d'automates ayant la structure selon l'invention, les compositions 7 comportent une troisième étape consistant à réaliser des compositions uniquement par le mode de communication pseudo-synchrone, pour composer les réseaux de Petri fournis par la premiètre étape. Le mode de communication pseudo-synchrone est obtenu au moyen d'une seule file du type "premier entré premier sorti", et en donnant une priorité aux transitions déclenchées par des évènements conséquences de transitions internes aux réseaux à composer, par rapport aux transitions déclenchées par des évènements externes à ces réseaux.

Cette priorité garantit une communication synchrone à l'extérieur du réseau résultant mais maintient une communication asynchrone à l'intérieur du réseau résultant.

La figure 9 illustre la communication pseudo-synchrone. Elle représente un réseau de Petri R18 résultant de la composition de trois réseaux de Petri R15, R16, R17 au moyen d'une file de type "premier entré premier sorti" référencée FIFO5 et qui est incorporée au réseau résultant R18. Ce réseau résultant possède une interface le reliant au reste de l'ensemble d'automates et le reliant à l'extérieur de l'ensemble, constituée par exemple d'une file d'entrée référencée FIFO3 et d'une file de sortie référencée FIOF4. La file FIFO5 comporte trois entrées reliées respectivement à trois sorties des réseaux R15 à R17 et trois sorties reliées respectivement à trois entrées des réseaux R15 à R17. Chaque évènement qui est la conséquence d'une transition dans l'un des réseaux R15, R16, R17 et qui est le déclencheur d'une autre transition dans l'un de ces réseaux transite par la file d'attente FIFO5. Ces évènements vont donc réagir sur les réseaux R15, R16, R17 dans l'ordre où ils sont inscrits dans la file d'attente FIFO5. Cette file, et la priorité selon laquelle elle est gérée, maintiennent le synchronisme entre les évènements externes au réseau résultant R18.

Dans cet exemple, le réseau R15 comporte une transition déclenchée par l'évènement I1 et ayant pour conséquence l'évènement I2. Le réseau R16 possède une première transition déclenchée par un évènement qui est un message MES1 reçu par l'interface et cette transition a pour conséquence un évènement I1. Le réseau R16 possède une seconde transition déclenchée par un évènement qui est un message MES2, et qui est sans conséquence. Le réseau R17 possède une transition qui est déclenchée par l'évènement I2 et qui a pour conséquence un évènement constitué par un message MES3.

Sur la figure 9, les chiffres entre parenthèses indiquent l'ordre de déclenchement des transitions conformément à la règle de priorité. A l'instant considéré, les messages MES1 et MES2 viennent d'être inscrits dans la file d'entrée FIFO3 de l'interface du réseau résultant R18. La première transition du réseau R16 est déclenchée par le message MES1 qui est lu en premier dans la file d'entrée FIFO3. Cette transition a pour conséquence l'évènement I1. Ce dernier déclenche immédiatement la transition du réseau R15 car il est prioritaire par rapport à la lecture du message MES2. Cette transition, qui est la deuxième transition depuis l'arrivée des messages, a pour conséquence l'évènement I2. L'évènement I2 est lui aussi prioritaire par rapport à la lecture du message MES2. Il déclenche la transition du réseau R17, qui a pour conséquence un évènement qui est l'émission d'un message MES3 qui est inscrit dans la file de sortie FIFO4. Il n'y a plus d'interaction interne possible pour le moment, la règle de priorité autorise à lire le prochain message MES2, qui est stocké dans la file d'entrée FIFO3. Ce message MES2 est un évènement qui déclenche la seconde transition du réseau R16. L'ordre de prise en compte des messages est donc finalement : MES1, MES3, MES2. Le message MES2 ne déclenche la seconde transition du réseau R16 qu'après que le message MES1 ait été complètement traité, c'est-à-dire après avoir déclenché la première transition de R16 puis la transition de R15 puis la transition de R17. La communication entre les réseaux R15, R16, R17 est donc globalement asynchrone à l'intérieur du réseau résultant R18, mais la communication est synchrone avec l'extérieur.

Considérons l'application de ce procédé préférentiel, à la conception de l'ensemble d'automates E qui est représenté sur la figure 1.

Au départ, le concepteur connaît les fonctions réalisées par les environnements des interfaces externes I1, I2, I3; et il connaît la fonction que doit remplir chacun des automates de l'ensemble : A1, A2, A3, A4. La fonction de chacun de ces environnements et de ces automates est décomposable en comportements partiels. Le concepteur décrit chacun de ces comportements partiels au moyen d'un réseau de Petri élémentaire, c'est-à-dire, ne comportant que quelques transitions et quelques places. Chacun de ces réseaux élémentaires représente une "brique" d'automate.

Cette description consiste à fournir à la machine de développement une étiquette pour chaque transition, cette étiquette contenant un évènement déclencheur et la liste des évènements conséquences de cette transition, notés de la façon décrite précédemment en référence à la figure 2. En principe, il n'y a pas, dans un même réseau de Petri initial, deux transitions au même instant par un même évènement. Cependant la technique des réseaux de Petri et le procédé selon l'invention n'interdisent pas de concevoir et d'utiliser un réseau de Petri initial comportant plusieurs transitions déclenchables au même instant par un même évènement. Ces transitions sont dites indéterministes. Il est cependant nécessaire que des conditions supplémentaires permettent de lever l'indétermination du choix de déclenchement de ces transitions, au moment de l'implémentation de l'ensemble d'automates.

Les évènements qui constituent les étiquettes des réseaux de Pétri élémentaires initiaux sont : des évènements concrétisant les interfaces externes I1, I2, I3; des évènements concrétisant les interfaces inter-automates 14 à 17; des évènements concrétisant des interfaces inter-réseaux initiaux; et des évènements internes à un automate, réalisant un choix entre des transitions indéterministes.

Le concepteur fournit en outre à la machine de développement une description de contraintes inter-réseaux initiaux correspondant au comportement de l'environnement extérieur à l'ensemble d'automates E, et une description de propriétés souhaitées pour les réseaux de Petri élémentaires initiaux, mais aussi pour les réseaux de Petri résultant des compositions réalisées ultérieurement. Ces propriétés souhaitées sont d'une part la consistance de chaque réseau de Petri, et d'autre part des proprités spécifiques à chacun de ces réseaux.

Le concepteur fournit aussi à la machine de développement une description de réseaux de Petri initiaux, modélisant respectivement les comportements de l'environnement extérieur à chacune des interfaces externes I1, I2, I3 de l'ensemble d'automates E. Conformément au mode de mise en oeuvre préférentiel du procédé selon l'invention, le concepteur conçoit les réseaux de Petri initiaux de telle sorte que chacun comporte au plus une interface externe à un automate, et il commande la composition des réseaux initiaux selon la première et la deuxième étapes décrites précédemment.

Sur la figure 1, les opérations de composition de la première étape sont toutes repérées par le chiffre 1′, les opérations de composition de la deuxième étape sont toutes repérées par le chiffre 2′, et les opérations de composition de la troisième étape sont toutes repérées par le chiffre 3'.

La première étape consiste à composer des réseaux de Petri initiaux deux à deux par le mode de communication synchrone, et à vérifier que les réseaux résultants ont les propriétés souhaitées, pour obtenir des réseaux de Petri comportant au plus une interface externe à un automate. Par exemple, dans l'automate A1, dont les comportements partiels sont modélisés par des réseaux de Petri élémentaires B1 à B13, la première étape consiste à :
- composer les réseaux initiaux B1 et B2, pour obtenir un réseau résultant P1;
- composer le réseau résultant P1 avec le réseau initial B3, pour obtenir un réseau résultant S2 qui a une interface unique, I1, avec l'extérieur à l'automate A1.

Tous les réseaux B1, B2, B3 qui ont I1 pour interface externe ont été composés. Le réseau résultant S2 représente un sous-automate qui sera utilisé au cours de la deuxième étape du procédé.

La mise en oeuvre consiste ensuite à composer d'autres réseaux initiaux :
- composer les réseaux initiaux B4 et B5, pour obtenir un réseau résultant P2;
- composer les réseaux initiaux B6 et B7 pour obtenir un réseau résultant P3;
- composer les deux réseaux résultants P2 et P3, pour obtenir un réseau résultant S3.

Tous les réseaux B4, B5, B6, B7 qui ont I6 pour interface externe ont été composés. Le réseau résultant S3 représente donc un sous-automate.

La mise en oeuvre du procédé selon l'invention consiste ensuite à :
- composer les réseaux initiaux B8 et B9, pour obtenir un réseau résultant P4;
- composer le réseau résultant P4 avec le réseau initial B6 pour obtenir un réseau résultant S5.

Tous les réseaux B8, B9, B10 qui ont I7 pour interface externe ont été composés. Le réseau résultant S5 représente donc un sous automate.

La mise en oeuvre consiste ensuite à composer les réseaux initiaux B12 et B13, pour obtenir un réseau résultant S4 qui n'a pas d'interface externe à l'automate A1. Il reste un réseau initial B11 qui n'a pas été composé mais, dans cet exemple, le concepteur choisit délibérement de ne pas le composer. Le réseau résultant S4 et le réseau initial subsistant B11 représentent eux aussi des sous-automates, car ils font partie des réseaux issus de la première étape de la mise en oeuvre.

De manière analogue, la première étape de mise en oeuvre consiste, pour l'automate A2, à :
- composer en deux étapes des réseaux de Petri élémentaires initiaux B25, B26, B27 pour obtenir un sous-automate S14 ayant une interface I6 externe à l'automate A2;
- composer deux réseaux de Petri élémentaires initiaux B28 et B29 pour obtenir un sous-automate S13 qui n'a aucune interface externe à l'automate A2;
- composer deux réseaux de Petri initiaux B30 et B31 pour obtenir un sous-automate S12 qui a une interface I5 externe à l'automate A2;
- composer en trois étapes les réseaux de Petri B32, B33, B34, B35 pour obtenir un sous-automate S15 possédant une interface I3 externe à l'automate A2, et externe à l'ensemble E;

Pour l'automate A3, la première étape de la mise en oeuvre consiste à :
- composer les réseaux de Petri élémentaires initiaux B14 et B15 pour obtenir un sous-automate S7 possédant une interface I2 externe à l'automate A3, et externe à l'ensemble E;
- composer en deux étapes les réseaux de Petri élémentaires B16, B17, B18 pour obtenir un sous-automate S8 possédant une interface I7 externe à l'automate A3;
- composer les réseaux de Petri élémentaires initiaux B19 et B20 pour obtenir un sous-automate S9 possédant une interface I4 externe à l'automate A3.

Pour l'automate A4, la première étape consiste à :
- composer deux réseaux de Petri initiaux B21 et B22 pour obtenir un sous-automate S10 possédant une interface I4 externe à l'automate A4;
- composer deux réseaux de Petri élémentaires initiaux B23 et B24 pour obtenir un sous-automate S11 possédant une interface I5 externe à l'automate A4.

Pour les environnements respectifs des interfaces I1, I2, I3 externes à l'ensemble d'automates E, la première étape consiste :
- composer deux réseaux de Petri élémentaires B36 et B37, modélisant respectivement des comportements partiels de l'environnement extérieur à l'interface I1, pour obtenir un sous-automate S1 ayant une seule interface qui est cette interface I1;
- composer deux réseaux de Petri initiaux B38 et B39 qui représentent respectivement des comportements partiels de l'environnement extérieur à l'interface I2 externe à l'ensemble E, pour obtenir un sous-automate S6 ayant une seule interface qui est cette interface l'interface I2;
- composer deux réseaux de Petri élémentaires B40 et B41 modélisant respectivement des comportements partiels de l'environnement extérieur à l'interface I3 externe à l'ensemble E, pour obtenir un sous-automate S16 ayant une seule interface constituée par l'interface I3.

La deuxième étape de la mise en oeuvre du procédé consiste, pour chaque interface externe à un automate, c'est-à-dire aussi bien les interfaces inter-automates que les interfaces externes à l'ensemble E, à : composer deux à deux par le mode de communication asynchrone des réseaux S1 à S16 la première étape, et ayant en commun une interface inter-automates ou externe à l'ensemble d'automates; et à vérifier que le réseau obtenu a les propriétés souhaitées par le concepteur. Le concepteur indique à la machine les deux réseaux à composer et indique qu'ils doivent être composés par le mode de communication asynchrone. Chaque composition fournit un réseau de Petri résultant qui modélise la communication entre deux interfaces inter-automates ou entre une interface externe à un automate et l'environnement de cet automate. Si la machine de développement constate que le réseau résultant d'une composition n'a pas les propriétés souhaitées pour ce réseau, elle le signale au concepteur et celui-ci doit modifier certains réseaux de Petri initiaux et relancer la première étape, pour les réseaux qui ont été composés et dont le réseau résultant n'a pas les propriétés souhaitées.

Dans cet exemple, la deuxième étape consiste donc à :
- composer le sous-automate S1 qui modélise l'environnement extérieur à l'interface I1 externe à l'ensemble E, et le sous-automate S2 de l'automate A1, pour obtenir un réseau résultant RC1 modélisant une communication entre A1 et l'extérieur à l'ensemble E, par l'interface externe I1;
- composer le sous-automate S6 modélisant l'environnement extérieur à l'interface I2, avec le sous-automate S7 de l'automate A3, pour obtenir un réseau résultant RC2 modélisant la communication entre A2 et l'extérieur à l'ensemble E, par l'interface I2;
- composer le sous-automate S16 modélisant l'environnement extérieur à l'interface I3, avec le sous-automate S15 de l'automate A2, pour obtenir un réseau résultant RC6 modélisant la communication de A2 avec l'extérieur à l'ensemble E, par l'interface I3;
- composer le sous-automate S5 de l'automate A1 avec le sous-automate S8 de l'automate A3 pour obtenir un réseau résultant RC3 modélisant la communication par l'interface I7 entre les automates A1 et A3;
- composer le sous-automate S9 de l'automate A3 avec le sous-automate S10 de l'automate A4 pour obtenir un réseau résultant RC4 modélisant la communication par l'interface I4 entre les automates A3 et A4;
- composer le sous-automate S11 de l'automate A4 avec le sous-automate S12 de l'automate A2, pour obtenir un réseau résultant RC5 modélisant la communication par l'interface I5 entre les automates A2 et A4;
- composer le sous-automate S14 de l'automate A2 avec le sous-automate S3 de l'automate A1, pour obtenir un réseau résultant RC7 modélisant la communication par l'interface I6 entre les automates A1 et A2.

Lorsque tous les réseaux résultants issus de la deuxième étape possèdent les propriétés souhaitées par le concepteur, la communication inter-automates et la communication avec l'environnement extérieur à l'ensemble E peuvent être considérées comme mise au point. Le concepteur passe alors à la mise en oeuvre de la troisième étape. Celle-ci consiste à réaliser des compositions par le mode de communication pseudo-synchrone, pour composer des réseaux de Petri modélisant des sous-automates issus de la première étape et validés par la deuxième étape, jusqu'à obtenir pour chaque automate, un réseau de Petri modélisant la fonction de cet automate, notamment les communications entre les sous-automates qui constituent cet automate. Les réseaux de Petri S1, S6, S16 ont été utilisés pour modéliser les communications avec l'extérieur à l'ensemble, mais ils ne font pas partie d'un automate A1,...,A4. Ils ne sont donc pas considérés au cours de cette troisième étape.

Dans cet exemple, la troisième étape consiste à :
- composer les sous-automates S2, S3, S4, S5, et B11 pour obtenir un réseau de Petri résultant modélisant l'ensemble de l'automate A1;
- composer les sous-automates S7, S8, S9, pour obtenir un réseau résultant modélisant l'automate A3;
- composer les sous-automates S10 et S11 pour obtenir un réseau résultant modélisant l'automate A4;
- composer les sous-automates S12, S13, S14, S15, pour obtenir un réseau résultant modélisant l'automate A2.

Lorsque tous les réseaux résultant de cette troisième étape ont effectivement les propriétés souhaitées par le concepteur, la mise au point des automates peut être considérée comme terminée. Il ne reste plus qu'à implémenter ces automates. Cette implémentation est réalisée de préférence en implémentant les sous-automates, plutôt que les automates, sous la forme de tables de données décrivant les transitions de ces sous-automates. Ces tables de données sont déduites, de manière classique, du graphe d'accessibilité déterminé au cours de l'analyse de chacun des réseaux de Petri issus de la première étape et validés, pendant la deuxième étape de la mise en oeuvre du procédé préférentiel.

L'implémentation consiste en outre à : implémenter les communications synchrones et pseudo-synchrones, qui ont permis de composer les réseaux au cours de la deuxième et de la troisième étape, sous la forme de suite d'instructions; et implémenter un moteur d'automates pour chaque automate, ce moteur utilisant ces tables de données et ces suites d'instructions pour concrétiser cet automate. La réalisation d'un logiciel implémentant ces moteurs d'automate est à la portée d'un Homme de l'Art.

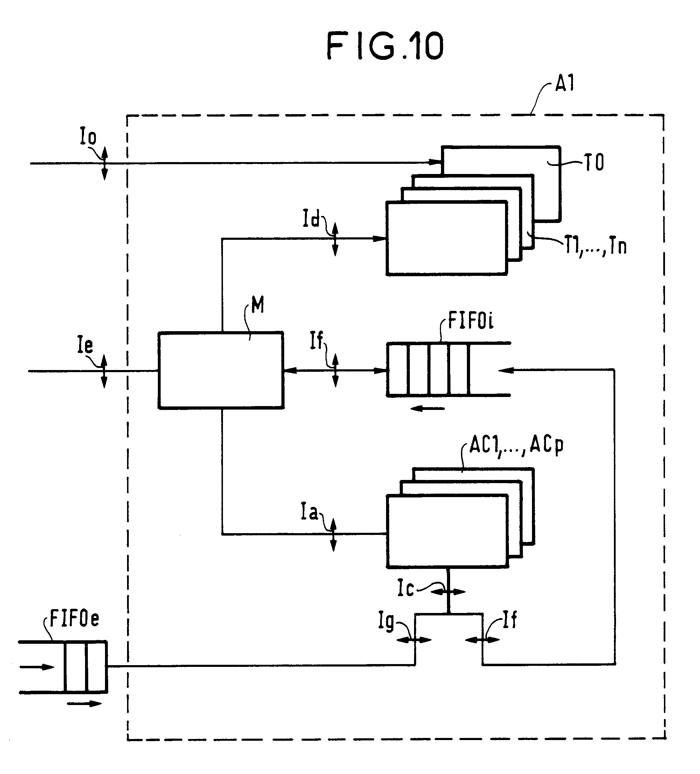

La figure 10 illustre le fonctionnement d'un moteur d'automates M associé à un automate A appartenant à un ensemble d'automates communicants. Elle illustre en particulier l'aspect multi-sous-automates de ce fonctionnement. Le moteur M exploite des tables de données T1,...Tn concrétisant respectivement n sous-automates qui constituent l'automate A associé au moteur M; une table To, appellée table d'observation, reliée à l'extérieur de l'automate A par une interface Io; une file FIFOi du type premier entré premier sorti, interne à cet automate A; une file FIFOe, du type premier entré premier sorti, externe à cet automate et constituant une interface de communication asynchrone avec l'extérieur de cet automate A; et des actions AC1,...,ACP constituées chacune d'une suite d'instructions. La file interne FIFOi est celle utilisée pour réaliser la communication pseudo-synchrone entre les sous-automates constituant l'automate considéré. Les messages inter-sous-automates transitent dans cette file, où ils sont lus en priorité par rapport au traitement des messages provenant de l'environnent extérieur à l'automate A, par la file FIFOₑ.

Le moteur M comporte : une interface Ie le reliant avec l'environnement extérieur à l'automate A; une interface Id le reliant aux tables T0, T1,...,Tn; et une interface Ia le reliant aux actions AC1,..., ACP. Les actions AC1,..., ACₙ ont en outre une interface Ic composée d'une interface Ig, et d'une interface If.

L'interface Ie permet au moteur M de recevoir des messages en provenance d'une application, pour déclencher un cycle d'automate. L'interface Id permet au moteur M d'accèder aux données des tables T1,...,Tn pour exécuter les n sous-automates constituant l'automate A en interprêtant ces données. L'interface Ia permet au moteur M d'exécuter une action, qu'il désigne par un nom d'appel.

L'interface Ic regroupe deux interfaces :
- une interface If de gestion de la file interne FIFOi, permettant au moteur M de lire un évènement stocké dans cette file, et permettant des échanges de messages entre les n sous-automates de l'automate A;
- une interface Ig avec la file externe FIFOe, permettant au moteur M l'échange de message avec d'autres automates.

L'interface Io est une interface de gestion de la table d'observation T0, notamment pour modifier des domaines d'observation (évènements, états, transitions, commande d'activation de l'observation). Le moteur M utilise ces informations lorsque l'observation est activé.

Le moteur d'automate M permet au concepteur de l'ensemble d'automates d'observer le fonctionnement interne de l'automate A car il lui permet de déclencher des actions particulières lors d'un état particulier ou lors du franchissaient de certaines transitions, par exemple mémoriser un contexte avant ou après des franchissaient de transitions. Les informations mémorisées dans la table d'observation T0 sont reçus de l'extérieur de l'automate A par l'interface Io. Ces informations sont gérées par une application d'observation et sont exploitées par le moteur M.

Le fonctionnement de l'automate A comprend en outre 3 types de processus :
- réception de messages sur les interfaces Io, Ie, et FIFOe;
- émission de messages sur les interfaces Io, Ie,;
- interprêtation des tables de sous-automate T1,...,Tn, et de la table d'observation T0.

L'interprêtation des tables T0, T1, ...,Tn comporte des cycles dits d'automate qui comportent chacun un ou plusieurs cycles dits de sous-automate. Un cycle d'automate est déclenché par l'arrivée d'un message dans la file externe FIFOe. Il consiste tout d'abord à déterminer un nouvel état pour le sous-automate concerné par cet évènement, et déterminer une ou plusieurs actions correspondant à ce changement d'état. Il se poursuit par un ou plusieurs cycles de sous-automate consistant chacun à lire dans une table T0,..., Tn les données de réalisation d'une action telle que : l'émission d'un message inter-sous-automates via la file interne FIFOi; ou un message inter-automates, via l'interface Ie; ou un message de faute, destiné à la machine de développement et au concepteur, via l'interface Ie, lorsque le moteur ne reconnaît pas un évènement. Le cycle d'automate se termine par une action qui est un message signalant à l'extérieur de l'automate A, par l'interface Ie, que le traitement d'un cycle d'automate est achevé. Le moteur M peut éxécuter, au cours d'un même cycle de sous-automate, une pluralité d'actions correspondant respectivement à une pluralité de briques différentes.

La réalisation d'un moteur d'automate M ainsi caractérisé est à la portée d'un Homme du Métier.

La portée de l'invention n'est pas limitée à un ensemble d'automates concrétisé par un logiciel. Un ensemble d'automate ayant la structure selon l'invention peut aussi être concrétisé par un circuit logique câblé ou microprogrammé.

## Revendications

**1)** Structure d'un ensemble d'automates communicants, ces automates comportant une pluralité d'interfaces qui traitent une pluralité de messages entrelacés,
caractérisée en ce que les automates (A1,...,A4) de cet ensemble (E) communiquent entre eux et avec l'environnement extérieur à l'ensemble, selon un mode de communication asynchrone uniquement (2′);
en ce que chaque automate (A1,...,A4) est une combinaison de sous-automates (S1,..., S16), chaque sous-automate comportant au plus une interface (I1,..., I7) externe à un automate; tous les sous-automates d'un même automate communiquant entre eux par un seul mode de communication dit pseudo-synchrone (3′) selon lequel les évènements constituant une communication sont synchrones vis-à-vis de l'extérieur des sous-automates en communication, et sont asynchrones vis-à-vis de l'intérieur de ces sous-automates;
et en ce que chaque sous-automate (S1,...,S16) est une combinaison d'automates élémentaires (B1,...,B41) appelés briques, toutes les briques d'un même sous-automate communicant entre elles par un mode de communication synchrone uniquement (1′).

**2)** Structure selon la revendication 1, caractérisée en ce que, pour implémenter cet ensemble d'automates (E), elle comporte en outre un moteur d'automate (M) pour chaque automate A;
et en ce que ce moteur d'automate a pour fonctions de gérer les cycles. de cet automate, et comporte une file (FIFOi) du type "premier entré premier sorti" appellée file interne à l'automate, pour transférer des messages entre les sous-automates de cet automate, chaque message inter-sous-automates étant inscrit dans la file interne, et un message étant lu dans la file interne au début de chaque cycle du moteur.

**3)** Structure selon la revendication 2, caractérisée en ce que le moteur (M) réalise des cycles dits d'automate consistant à :
- lire un évènement externe inscrit dans une file (FIFOe) d'entrée-sortie de l'automate (A), appellée file externe;
- faire au moins un cycle de sous-automate, jusqu'à épuisement des évènements stockés dans la file (FIFOi) interne à l'automate.
et en ce que, pendant chaque cycle d'automate, le moteur réalise au moins un cycle dit cycle de sous-automate, consistant à :
- lire un évènement dans la file interne (FIFOi) de l'automate;
- déterminer un nouvel état pour le sous-automate concerné par cet évènement;
- déterminer et déclencher au moins une action (AC1,...,ACP) correspondant à ce changement d'état du sous-automate;

**4)** Structure selon la revendication 2, caractérisée en ce que le moteur (M) peut exécuter, au cours d'un même cycle de sous-automate, une pluralité d'actions correspondant respectivement à une pluralité de briques différentes.
